Europäisches Patentamt

European Patent Office

Office européen des brevets

(11) Numéro de publication: **0 135 447**
**B1**

(12) **FASCICULE DE BREVET EUROPEEN**

(45) Date de publication du fascicule du brevet:
**05.08.87**

(21) Numéro de dépôt: **84401815.0**

(22) Date de dépôt: **13.09.84**

(51) Int. Cl.⁴: **H 04 N 7/16**

(54) Procédé de brouillage et de débrouillage d'un signal de télévision et appareil de débrouillage correspondant.

(30) Priorité: **22.09.83 FR 8315054**

(43) Date de publication de la demande:
**27.03.85 Bulletin 85/13**

(45) Mention de la délivrance du brevet:
**05.08.87 Bulletin 87/32**

(84) Etats contractants désignés:
**BE CH DE GB LI**

(56) Documents cités:
**US - A - 3 602 737**
**US - A - 4 222 067**

(73) Titulaire: **Fernandez, Enrique, 22, rue de Lausanne**
**Villebon sur Yvette, F-91120 Palaiseau (FR)**

(72) Inventeur: **Fernandez, Enrique, 22, rue de Lausanne**
**Villebon sur Yvette, F-91120 Palaiseau (FR)**

(74) Mandataire: **Mongrédien, André et al, c/o**
**BREVATOME 25, rue de Ponthieu, F-75008 Paris (FR)**

## Description

La présente invention a pour objet un procédé de brouillage et de débrouillage d'un signal de télévision et un appareil de débrouillage d'un signal de télévision brouillé. Cette invention s'applique aux émissions de télévision dont la réception est réservée à certains usagers. C'est le cas par exemple de la télévision à péage.

La distribution sélective d'un signal de télévision peut être réalisée simplement au moyen d'un réseau câblé auxquels sont rattachés les seuls usagers autorisés. Cette technique est la plus simple mais nécessite une infrastructure lourde et coûteuse. De plus, il est relativement facile pour une personne non autorisée de se connecter sur le réseau.

D'autres méthodes pour protéger un signal de télévision sont connues. Dans les systèmes tels que ANTIOPE en France ou PRESTEL en Grande-Bretagne, le signal de télévision émis est codé. Le récepteur de télévision est muni d'un moyen de décodage de ce signal, d'une mémoire d'image et d'un générateur de caractères. Ce système est surtout adapté à la transmission d'images fixes, la mémoire d'image permettant un rafraîchissement d'image local, c'est-à-dire sans utiliser le canal d'émission du signal de télévision. Le signal de télévision émis étant codé, sa protection vis-à-vis des personnes non autorisées est très bonne mais cette méthode de codage nécessite une modification du récepteur de télévision conventionnel.

Une autre méthode connue de protection d'un signal de télévision, ne nécessitant pas de modification du récepteur de télévision, consiste à superposer au signal émis un signal de brouillage. A la réception, le signal de télévision brouillé est reçu dans un débrouilleur qui élimine le signal de brouillage. Le signal de télévision délivré par le débrouilleur est ensuite appliqué sur l'entrée d'un récepteur de télévision classique.

Le document US-A-3 602 737 décrit une méthode de filtrage d'un signal de télévision, mais cette méthode concerne la suppression d'un bruit naturel, à large spectre, et non pas la suppression d'un signal de brouillage, relativement étroit en fréquence. La méthode décrite consiste à diviser la partie haute fréquence du signal vidéo en deux gammes d'amplitude. Le signal de faible amplitude, qui correspond sensiblement au signal de bruit, est soustrait du signal vidéo, alors que le signal de forte amplitude est ajouté au signal résultant de cette différence.

On connaît également par le document US-A-4 222 067 une technique de brouillage utilisant deux signaux de brouillage. Dans ce procédé, on ajoute un signal vidéo d'interférence de fréquence porteuse $f_o$, comprise entre les fréquences des sous-porteuses vidéo et son du signal de télévision. Mais le signal d'interférence n'étant pas très proche des signaux vidéo et son, il n'interdit pas la réception du signal vidéo sur un récepteur accordé sur la sous-porteuse vidéo et la réception du signal son sur un récepteur accordé sur la sous-porteuse son. Un second signal, dit signal de sécurité, dont la fréquence porteuse $f_s$ se trouve en dehors de la bande du signal de télévision doit donc être ajouté pour empêcher la réception du signal vidéo par décalage de l'accord du récepteur.

Selon l'art connu, le débrouilleur comprend un filtre passe-bande, cette bande laissant passer le signal de télévision seul, ledit filtre recevant le signal de télévision brouillé et délivrant le signal de télévision débrouillé. Un inconvénient important de ce débrouilleur tient à ce que, pour des raisons de filtrage, le signal de brouillage doit occuper une fréquence située à une distance importante des fréquences des sous-porteuses image et son du signal de télévision. En effet, si le signal de brouillage est proche de l'une des sous-porteuses image ou son, le filtre qui élimine le signal de brouillage va filtrer également une partie du signal de télévision. L'éloignement en fréquence, nécessaire, du signal de brouillage et du signal de télévision a alors pour conséquence d'une part, d'augmenter la largeur du canal d'émission donc l'encombrement de la bande allouée aux émissions de télévision et, d'autre part, de faciliter l'élimination du signal de brouillage par des personnes non autorisées.

Un objectif de l'invention est de proposer un procédé de brouillage et de débrouillage palliant ces inconvénients. Ce procédé est remarquable en ce qu'à l'émission, on superpose au signal de télévision un signal de brouillage très proche, en terme de fréquence, dudit signal de télévision et en ce qu'à la réception, on filtre le signal de télévision brouillé pour isoler le signal de brouillage, le signal de télévision débrouillé étant obtenu en soustrayant le signal de brouillage du signal de télévision brouillé.

De manière plus précise, l'invention a pour objet un procédé de brouillage et de débrouillage d'un signal de télévision comprenant un signal d'image occupant une première bande de fréquence autour d'une sous-porteuse d'image et un signal de son occupant une seconde bande de fréquence autour d'une sous-porteuse de son, ces deux bandes de fréquence étant disjointes, procédé dans lequel on superpose, à l'émission, un signal de brouillage audit signal de télévision, ledit signal de brouillage occupant une troisième bande de fréquence, disjointe des première et seconde bandes de fréquence, la différence relative entre la fréquence du signal de brouillage et la fréquence de l'une des sous-porteuses images ou son étant inférieure à 5% et le débrouillage consistant à isoler par filtrage le signal de brouillage du signal de télévision brouillé, à égaliser l'amplitude et la phase du signal de brouillage et du signal de télévision brouillé et à soustraire ledit signal de brouillage dudit signal de télévision brouillé.

Dans certains systèmes de télévision, le son est modulé en amplitude, la bande de fréquence du signal de son est alors réduite à la sous-porteuse son.

Selon un mode de mise en oeuvre du procédé de l'invention, le signal de brouillage est un signal monofréquence.

Selon un autre mode de mise en oeuvre de l'invention, le signal de brouillage est modulé en fréquence autour d'une fréquence porteuse.

Selon un autre mode de mise en oeuvre du procédé de l'invention, le signal de brouillage est surmodulé en amplitude.

Par «surmodulé en amplitude», on entend que l'amplitude du signal de brouillage est supérieure à l'amplitude du signal d'image. Celle-ci correspond au niveau de blanc dans les systèmes de télévision à modulation positive (France, Grande-Bretagne).

L'invention a aussi pour objet un appareil de débrouillage d'un signal de télévision brouillé. Selon l'invention, le signal de brouillage est isolé par filtrage et est ajouté au signal de télévision brouillé non filtré déphasé de 180°. Ainsi, le signal de brouillage étant ajouté lui-même déphasé de 180° est annulé. L'appareil de débrouillage délivre donc le seul signal de télévision.

Le système de brouillage de l'invention présente l'avantage que le signal de télévision n'est pas filtré, ce filtrage étant, dans les appareils de débrouillage connus, un facteur de dégradation du signal de télévision.

De manière plus précise, l'invention a aussi pour objet un appareil de débrouillage d'un signal constitué d'un signal de télévision et d'un signal de brouillage, ledit signal de télévision comprenant un signal d'image dans une première bande de fréquence et un signal de son dans une deuxième bande de fréquence, ces deux bandes de fréquence étant disjointes, ledit signal de brouillage étant dans une troisième bande de fréquence disjointe des première et deuxième bandes de fréquence, ledit appareil comprenant un premier coupleur, disposé en entrée de l'appareil, recevant le signal de télévision brouillé et délivrant sur deux sorties identiques ledit signal de télévision brouillé, un second coupleur, en sortie de l'appareil, à deux entrées identiques et une sortie sur laquelle est délivrée le signal de télévision débrouillé, une première voie et une seconde voie, chaque voie étant disposée entre une sortie du premier coupleur et une entrée du second coupleur, la première voie comportant un filtre de séparation laissant passer le signal de brouillage et bloquant les signaux d'image et de son, ledit appareil comprenant en outre au moins un atténuateur sur l'une des deux voies pour égaliser l'amplitude des signaux délivrés par chaque voie et au moins un déphaseur sur l'une des deux voies pour mettre en opposition de phase les signaux délivrés par chaque voie.

Selon le système de télévision utilisé et le signal de brouillage choisi, la bande de fréquence son et/ou la bande de fréquence du signal de brouillage peuvent être monofréquences ou de largeur négligeable devant la largeur de la bande de fréquence image.

Selon un mode de réalisation préféré de l'invention, le filtre de séparation est un filtre passe-bande à onde de surface.

Selon un mode de réalisation avantageux de l'appareil selon l'invention, la seconde voie comporte un atténuateur pour égaliser l'amplitude des signaux délivrés par chaque voie.

Selon une caractéristique particulière de l'appareil de l'invention, l'atténuateur a un niveau d'atténuation fixe.

Selon une caractéristique secondaire de l'appareil selon l'invention l'une des voies comporte en outre un atténuateur fin réglable.

Selon une caractéristique particulière de l'appareil de l'invention, l'une des voies comporte un déphaseur de 180°.

Selon une caractéristique secondaire de l'appareil de l'invention, l'un ou l'autre des deux coupleurs comprend un moyen de déphasage de 180°.

Selon une autre caractéristique secondaire de l'appareil de l'invention, l'une des voies comporte en outre un déphaseur réglable.

Selon une autre caractéristique secondaire de l'appareil selon l'invention, le déphaseur réglable est soit un condensateur réglable en dérivation sur l'une des deux voies, soit une ligne de longueur réglable.

D'autres caractéristiques et avantages de l'invention ressortiront mieux de la description qui va suivre, donné à titre illustratif et non limitatif, en référence aux dessins annexés, dans lesquels:

la figure 1 illustre schématiquement la répartition des bandes de fréquence image et son dans un canal de télévision, et les positions possibles du signal de brouillage selon le procédé de l'invention,

la figure 2 est une représentation schématique d'un mode de réalisation de l'appareil de débrouillage selon l'invention.

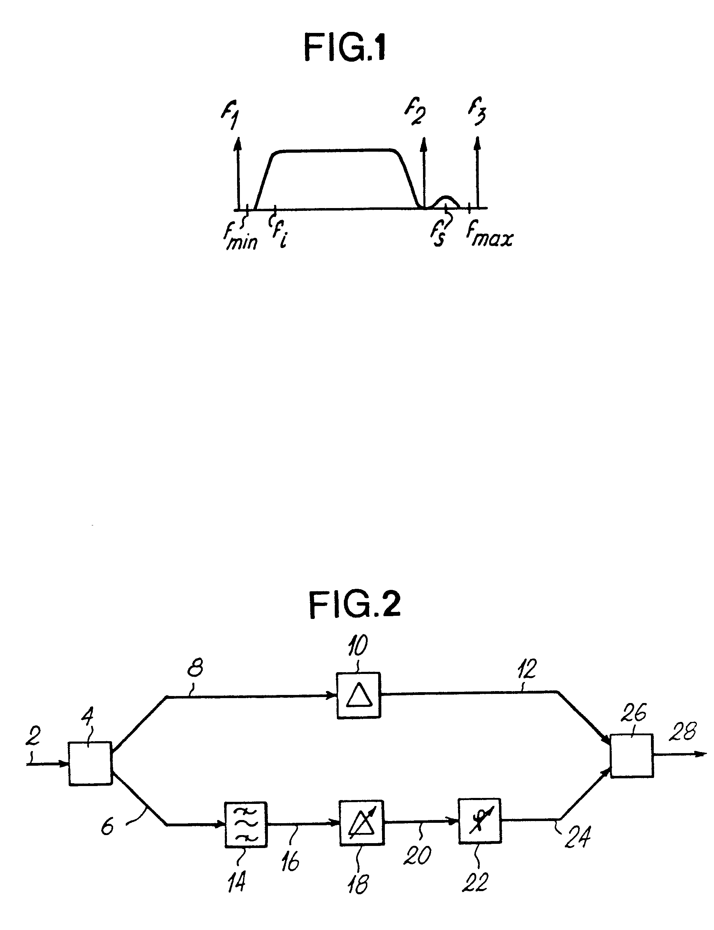

On a représenté sur la figure 1 la répartition en fréquence des signaux d'image et de son dans un canal de télévision et les positions possibles du signal de brouillage. A titre d'exemple numérique, on considère le cas d'un signal de télévision émis par la deuxième chaîne de télévision française. Sur cette chaîne, la largeur d'un canal, c'est-à-dire la différence entre les fréquences $f_{max}$ et $f_{min}$ est de 7 MHz. La sous-porteuse image $f_i$ se trouve à 0,25 MHz au-dessus de $f_{min}$ et la sous-porteuse son $f_s$ se trouve à 6,5 MHz au-dessus de la sous-porteuse image. Selon les normes de cette chaîne, la fréquence maximale présente dans le signal image est de 6 MHz. La largeur maximale de la bande de fréquence $B_i$ est donc de 6 MHz. Selon ces mêmes normes, le signal son est modulé en amplitude. La bande de fréquence son est donc limitée, autour de la sous-porteuse $f_s$, à une largeur très faible.

Il existe cependant des systèmes de télévision dans lesquels le signal de son est modulé en fréquence; c'est le cas par exemple du système de télévision nord-américain N.T.S.C. et du système de télévision soviétique. Dans le système nord-américain par exemple, la largeur de la bande son est de 50 kHz.

Les positions possibles du signal de brouillage, quel que soit le système de télévision empolyé, sont indiquées par des raies $f_1$, $f_2$ et $f_3$. Selon l'invention, ce signal de brouillage peut être un signal monofréquence ou un signal modulé en fréquence centré sur une porteuse.

Outre la modulation du signal de brouillage en fréquence, il est possible, pour une meilleure protection du signal de télévision de surmoduler en amplitude ce signal de brouillage, c'est-à-dire d'utiliser un signal de brouillage dont l'amplitude est supérieure à la modulation maximale du signal d'image, Ceci augmente la perturbation du signal de télévision, donc améliore sa protection. En particulier, un signal de brouillage surmodulé en amplitude et de fréquence de modulation variable situé à proximité de la sous-porteuse son $f_s$, à gauche ou à droite de cette sous-porteuse, détériore à la fois l'image et le son du signal de télévision et assure donc la discrétion du signal de télévision émis.

On a représenté sur la figure 2 un mode de réalisation d'un appareil de débrouillage selon l'invention. Cet appareil comprend deux voies de traitement en parallèle. La première voie comprend en série un filtre 14, un atténuateur réglable 18 et un déphaseur réglable 22 et la seconde voie comprend un atténuateur fixe 10. L'appareil comprend en outre un coupleur 4 à une entrée et deux sorties, chacune reliée à une voie et un coupleur 26 à deux entrées et une sortie, chaque entrée étant reliée à l'une des deux voies.

Le débrouillage d'un signal de télévision se déroule de la manière suivante. Le signal de télévision brouillé est reçu dans l'appareil de débrouillage par une connexion 2. Le coupleur 4 délivre ce signal de télévision brouillé sur la connexion 6 de la première voie et délivre ce même signal, déphasé de 180°, sur la connexion 8 de la seconde voie.

Dans la première voie, ce signal est appliqué sur l'entrée du filtre 14. Ce filtre est un filtre passe-bande centré sur la fréquence du signal de brouillage. Pour ne laisser passer que le signal de brouillage, ce filtre doit être très sélectif et très raide. Un mode de réalisation avantageux de ce filtre consiste à utiliser un filtre à onde de surface. La bande passante d'un tel filtre peut être très faible devant la fréquence moyenne de la bande passante. Ces filtres sont étudiés en particulier dans «SURFACE WAVE FILTERS, Design, Construction and Use», chap. 6 (Surface Wave Bandpass Filters), p. 263-305, Ed. Herbert Matthews.

Le signal de brouillage délivré par le filtre 14 sur la connexion 16 a été atténué par ce filtre. Pour égaliser l'amplitude des signaux de chacune des voies, il convient donc d'atténuer le signal de la seconde voie. L'appareil de débrouillage comporte à cet effet un ou plusieurs atténuateurs.

Dans le mode de réalisation représenté sur la figure 2, l'appareil de débrouillage comprend un atténuateur 18 réglable sur la première voie et un atténuateur 10 sur la seconde voie. L'atténuateur 10 est un atténuateur fixe qui réalise une atténuation sensiblement égale à celle du filtre 14 de la première voie. L'atténuateur 18 disposé sur la première voie permet d'égaliser avec finesse l'amplitude des signaux de chacune des voies.

Outre l'effet d'atténuation, le filtre 14 à un effet de déphasage sur le signal de la première voie. Pour que les signaux délivrés par chacune des voies soient exactement en opposition de phase à la fréquence du signal de brouillage, on a disposé sur la première voie un déphaseur réglable 22 qui reçoit par la connexion 20 le signal délivré par l'atténuateur réglable 18. Le coupleur d'entrée 4 délivre deux signaux sensiblement en opposition de phase. Le rôle du déphaseur réglable 22 est d'ajuster de manière précise ce déphasage. Ce déphaseur peut être réalisé simplement par un condensateur réglable placé en dérivation sur la première voie.

Les deux signaux délivrés sur la connexion 24 de la première voie et sur la connexion 12 de la seconde voie sont donc rigoureusement en opposition de phase à la fréquence du signal de brouillage et ont subi une atténuation rigoureusement égale dans les deux voies. Le signal délivré par la seconde voie comporte le signal de télévision non filtré et le signal de brouillage alors que le signal délivré par la première voie ne comporte que le signal de brouillage. Il suffit donc, pour éliminer le signal de brouillage, de superposer les signaux délivrés par chacune des voies. Ceci est réalisé par le coupleur 26.

L'appareil de débrouillage illustré schématiquement sur la figure 2 n'est qu'un mode de réalisation parmi d'autres. Il est bien entendu possible, par exemple, de disposer l'atténuateur réglable 18 et/ou le déphaseur réglable 22 sur la seconde voie. Par ailleurs, on a décrit un appareil dont le coupleur d'entrée assure un déphasage de 180° entre les signaux qu'il délivre sur chacune de ses sorties. On peut remplacer ce coupleur par un coupleur délivrant le même signal sur chacune de ses deux sorties, un déphaseur de 180° étant disposé sur l'une des deux voies. Enfin, l'ordre des éléments disposés sur la première voie comprenant le filtre peut être différent de celui représenté sur la figure 2.

Le demandeur a effectué un essai de débrouillage d'un signal de télévision avec un appareil conforme à l'invention. Le signal de télévision a été émis sur le canal E 22 de la deuxième chaîne de télévision française. Dans ce canal, la fréquence de la sous-porteuse image est de 479,25 MHz et la fréquence de la sous-porteuse son est de 485,25 MHz.

Le signal de brouillage utilisé a une fréquence de 488 MHz, très proche de la fréquence de la sous-porteuse son puisque la différence relative entre ces deux fréquences est de l'ordre de 0,5%. Le signal de brouillage est de plus surmodulé en amplitude à 1 kHz de niveau 25 dB au-dessus du signal d'image.

Ce signal de télévision brouillé a été appliqué sur l'entrée d'un appareil de débrouillage conforme à l'invention. Une atténuation de 35 dB du signal de brouillage a été obtenue. Il a été constaté que le signal délivré par l'appareil de débrouillage a une qualité d'image et de son comparable à celle d'un signal non brouillé.

**Revendications**

1. Procédé de brouillage et de débrouillage d'un signal de télévision comprenant un signal d'image occupant une première bande de fréquence autour d'une sous-porteuse image ($f_i$) et un signal de son occupant une deuxième bande de fréquence autour d'une sous-porteuse son ($f_s$), ces deux bandes de fréquence étant disjointes, procédé dans lequel on superpose, à l'émission, un signal de brouillage ($f_1$, $f_2$, $f_3$) au signal de télévision, ledit signal de brouillage occupant une troisième bande de fréquence disjointe des première et deuxième bandes de fréquence, ledit procédé étant caractérisé en ce que, d'une part, la différence relative entre la fréquence de l'une des deux sous-porteuses image ou son ($f_i$ ou $f_s$) est inférieure à 5% et, d'autre part, le débrouillage consiste à isoler par filtrage (14) le signal de brouillage du signal de télévision brouillé, à égaliser l'amplitude et la phase (18, 22) du signal de brouillage et du signal de télévision brouillé, et à soustraire (26) ledit signal de brouillage dudit signal de télévision brouillé.

2. Procédé selon la revendication 1, caractérisé en ce que le signal de brouillage est un signal mono-fréquence.

3. Procédé selon la revendication 1, caractérisé en ce que le signal de brouillage est modulé en fréquence autour d'une fréquence porteuse.

4. Procédé selon l'une quelconque des revendications 1 à 3, caractérisé en ce que le signal de brouillage est surmodulé en amplitude.

5. Appareil de débrouillage d'un signal constitué d'un signal de télévision et d'un signal de brouillage, ledit signal de télévision comprenant un signal d'image dans une première bande de fréquence et un signal de son dans une deuxième bande de fréquence, ces deux bandes de fréquence étant disjointes, ledit signal de brouillage étant dans une troisième bande de fréquence disjointe des première et deuxième bandes de fréquence, ledit appareil étant caractérisé en ce qu'il comprend un premier coupleur (4) disposé en entrée de l'appareil, recevant le signal de télévision brouillé et délivrant sur deux sorties identiques ledit signal de télévision brouillé, un second coupleur (26), disposé en sortie de l'appareil, à deux entrées identiques et une sortie, une première voie et une seconde voie, chaque voie étant disposée entre une sortie du premier coupleur (4) et une entrée du second coupleur (26), la première voie comportant un filtre (14) conçu pour laisser passer le signal de brouillage et bloquer les signaux d'image et de son, ledit appareil comprenant en outre au moins un atténuateur (10, 18) sur l'une des deux voies pour égaliser l'amplitude des signaux ayant traversé chacune des voies et au moins un déphaseur sur l'une des deux voies pour mettre en opposition de phase les signaux délivrés par chaque voie, lesdits signaux étant appliqués au second coupleur qui délivre alors sur sa sortie le signal de télévision débarrassé du signal de brouillage.

6. Appareil selon la revendication 5, caractérisé en ce que le filtre (14) est un filtre passe-bande étroit à ondes de surface.

7. Appareil selon l'une quelconque des revendications 5 et 6, caractérisé en ce que la seconde voie comporte un atténuateur (10) pour égaliser les amplitudes des signaux délivrés par chaque voie.

8. Appareil selon la revendication 7, caractérisé en ce que ledit atténuateur a un niveau d'atténuation fixe.

9. Appareil selon l'une quelconque des revendications 7 et 8, caractérisé en ce que l'une des voies comporte en outre un atténuateur (18) réglable.

10. Appareil selon l'une quelconque des revendications 5 à 9, caractérisé en ce que l'une des voies comporte un déphaseur de 180°.

11. Appareil selon la revendication 10, caractérisé en ce que les fonctions assurées par l'un ou l'autre des coupleurs (4 et 26) et le déphaseur de 180° sont réalisées par un moyen unique.

12. Appareil selon l'une quelconque des revendications 10 et 11, caractérisé en ce que l'une des voies comporte en outre un déphaseur réglable.

13. Appareil selon la revendication 12, caractérisé en ce que le déphaseur réglable est un condensateur réglable en dérivation sur ladite voie.

14. Appareil selon la revendication 12, caractérisé en ce que le déphaseur réglable est constitué par une ligne de longueur réglable.

**Patentansprüche**

1. Verfahren zur Verzerrung und Entzerrung eines Fernsehsignals, das ein Bildsignal mit einem ersten Frequenzband um einen Bild-Hilfsträger ($f_i$) und ein Tonsignal, das ein zweites Frequenzband um einen Ton-Hilfsträger $Tf_s$) umfasst, wobei diese beiden Frequenzbänder voneinander getrennt liegen, bei welchem Verfahren man beim Senden dem Fernsehsignal ein Verzerrungssignal ($f_1$, $f_2$, $f_3$) überlagert, das ein drittes Frequenzband einnimmt, das vom ersten und zweiten Frequenzband getrennt ist, dadurch gekennzeichnet, dass einerseits der relative Differenzbetrag zwischen der Frequenz des Verzerrungssignals und der Frequenz von einem der Hilfsträger für Bild oder Ton ($f_i$ oder $f_s$) kleiner als 5 % ist, und andererseits die Entzerrung darin besteht, mittels Filterung (14) das Verzerrungssignal vom verzerrten Fernsehsignal zu trennen, die Amplitude und die Phase (18, 22) des Verzerrungssignals und des verzerrten Fernsehsignals gleich zu machen, und das Verzerrungssignal vom verzerrten Fernsehsignal abzuziehen (26).

2. Verfahren nach Anspruch 1, dadurch gekennzeichnet, dass das Verzerrungssignal ein monofrequentes Signal ist.

3. Verfahren nach Anspruch 1, dadurch gekennzeichnet, dass das Verzerrungssignal um eine Trägerfrequenz frequenzmoduliert ist.

4. Verfahren nach einem der Ansprüche 1 bis 3, dadurch gekennzeichnet, dass das Verzerrungssignal in seiner Amplitude übermoduliert ist.

5. Vorrichtung zur Entzerrung eines Signals, das aus einem Fernsehsignal und einem Verzerrungssignal besteht, wobei das Fernsehsignal ein Bildsignal in einem ersten Frequenzband und ein Tonsignal in einem zweiten Frequenzband umfasst, und diese beiden Frequenzbänder voneinander getrennt sind, und ferner das Verzerrungssignal in einem dritten Frequenzband liegt, das vom ersten und zweiten Frequenzband getrennt ist, dadurch gekennzeichnet, dass die Vorrichtung einen ersten Koppler (4) aufweist, der am Eingang der Vorrichtung angeordnet ist, das verzerrte Fernsehsignal empfängt und an zwei identische Ausgänge das verzerrte Fernsehsignal liefert, durch einen zweiten Koppler (26), der am Ausgang der Vorrichtung liegt, der zwei identische Eingänge und einen Ausgang aufweist, sowie einen ersten Kanal und einen zweiten Kanal, wobei jeder Kanal zwischen einem Ausgang des ersten Kopplers (4) und einem Eingang des zweiten Kopplers (26) liegt, der erste Kanal ein Filter (14) enthält, das derart ausgestaltet ist, um das Verzerrungssignal durchzulassen und das Bildsignal und Tonsignal zu sperren, die Vorrichtung ferner mindestens ein Dämpfungsglied (10, 18) in einem der beiden Kanäle enthält, um die Amplitude der Signale gleichzumachen, die jeden der Kanäle durchlaufen haben, sowie mindestens einen Phasenschieber in einem der beiden Kanäle, um die von jedem Kanal gelieferten Signale in Opposition zueinander zu bringen, wobei die Signale dem zweiten Koppler zugeführt werden, der dann an seinem Ausgang das Fernsehsignal liefert, das vom Verzerrungssignal befreit ist.

6. Vorrichtung nach Anspruch 5, dadurch gekennzeichnet, dass das Filter (14) ein Schmalbandfilter für Oberflächenwellen ist.

7. Vorrichtung nach einem der Ansprüche 5 und 6, dadurch gekennzeichnet, dass der zweite Kanal ein Dämpfungsglied (10) aufweist, um die Amplituden der von jedem Kanal gelieferten Signale gleichzumachen.

8. Vorrichtung nach Anspruch 7, dadurch gekennzeichnet, dass das Dämpfungsglied einen festgelegten Dämpfungspegel aufweist.

9. Vorrichtung nach einem der Ansprüche 7 und 8, dadurch gekennzeichnet, dass einer der Kanäle ein weiteres verstellbares Dämpfungsglied (18) enthält.

10. Vorrichtung nach einem der Ansprüche 5 bis 9, dadurch gekennzeichnet, dass einer der Kanäle einen Phasenschieber von 180° enthält.

11. Vorrichtung nach Anspruch 10, dadurch gekennzeichnet, dass die Funktionen, die durch den einen oder anderen Koppler (4, 26) und den Phasenschieber von 180° erzielt werden, mittels einer einzigen Vorrichtung realisiert werden.

12. Vorrichtung nach einem der Ansprüche 10 und 11, dadurch gekennzeichnet, dass einer der Kanäle ferner einen regelbaren Phasenschieber aufweist.

13. Vorrichtung nach Anspruch 12, dadurch gekennzeichnet, dass der regelbare Phasenschieber ein Regelkondensator in Abzweigung vom genannten Kanal ist.

14. Vorrichtung nach Anspruch 12, dadurch gekennzeichnet, dass der regelbare Phasenschieber aus einer Leitung einstellbarer Länge besteht.

## Claims

1. Process for scrambling and descrambling a television signal including an image signal occupying a first frequency band about an image subcarrier ($f_i$) and a sound signal occupying a second frequency band about a sound subcarrier ($f_s$), these two frequency bands being separated, a process in which there is superimposed, on transmission, a scrambling signal ($f_1$, $f_2$, $f_3$) on the television signal, the said scrambling signal occupying a third frequency band, separated from the first and second frequency bands, the said process being characterised in that, on the one hand, the relative difference between the frequency of the scrambling signal and the frequency of one of the two image or sound subcarriers ($f_i$ or $f_s$) is less than 5% and, on the other hand, the descrambling consists in isolating the scrambling signal from the scrambled television signal by filtering (14), in equalizing the amplitude and the phase (18, 22) of the scrambling signal and of the scrambled television signal, and in subtracting (26) the said scrambling signal from the said scrambled television signal.

2. Process according to Claim 1, characterised in that the scrambling signal is a monofrequency signal.

3. Process according to Claim 1, characterised in that the scrambling signal is frequency modulated about a carrier frequency.

4. Process according to any one of Claims 1 to 3, characterised in that the scrambling signal is over-modulated in amplitude.

5. Device for descrambling a signal formed from a television signal and a scrambling signal, the said television signal including an image signal in a first frequency band and a sound signal in a second frequency band, these two frequency bands being separated, the said scrambling signal being in a third frequency band separated from the first and second frequency bands, the said device being characterised in that it includes a first coupler (4) placed at the input of the device, receiving the scrambled television signal and delivering on two identical outputs the said scrambled television signal, a second coupler (26), placed at the output of the device, having two identical inputs and one output, a first channel and a second channel, each channel being placed between one output of the first coupler (4) and one input of the second coupler (26), the first channel including a filter (14) designed to allow the scrambling signal to pass through and to stop the image and sound signals, the said device also including at least one attenuator (10, 18) in one of the two channels in order to equalize the amplitude of the signals having passed through each of the channels and at least one phase shifter in one of the two channels in order to put the signals delivered by each channel in opposite phase, the said signals being applied to the second coupler which then delivers at its output the television signal with the scrambling signal removed.

6. Device according to Claim 5, characterised in that the filter (14) is a narrow band pass surface wave filter.

7. Device according to either of Claims 5 and 6, characterised in that the second channel includes an attenuator (10) in order to equalize the amplitudes of the signals delivered by each channel.

8. Device according to Claim 7, characterised in that the said attenuator has a fixed attenuation level.

9. Device according to either of Claims 7 and 8, characterised in that one of the channels also includes an adjustable attenuator (18).

10. Device according to any one of Claims 5 to 9, characterised in that one of the channels includes a 180° phase shifter.

11. Device according to Claim 10, characterised in that the functions provided by one or other of the couplers (4 and 26) and the 180° phase shifter are carried out by a single means.

12. Device according to either of Claims 10 and 11, characterised in that one of the channels also includes an adjustable phase shifter.

13. Device according to Claim 12, characterised in that the adjustable phase shifter is a variable capacitor shunt connected to the said channel.

14. Device according to Claim 12, characterised in that the adjustable phase shifter is formed by a line of adjustable length.

# FIG.1

# FIG.2